# EUROPEAN PATENT SPECIFICATION

(11) **EP 2 188 677 B1**
(45) Date of publication and mention of the grant of the patent: **28.11.2012**
(21) Application number: 08788472.2
(22) Date of filing: 29.08.2008
(51) Int. Cl.: G04G 9/00, G04F 1/00, G09B 19/12

(54) **CLOCK FOR CHILDREN**
UHRWERK FÜR KINDER
HORLOGE POUR ENFANTS

(30) Priority: 06.09.2007 GB 0717284
(43) Date of publication of application: 26.05.2010
(73) Proprietor: Gro-Group International Limited, Ashburton Devon TQ13 7UP (GB)
(72) Inventor: HOLMES, Robert, Douglas, Kingsbridge Devon TQ7 4LG (GB); ALTHORPE, Christopher, John, Bristol BS1 5DU (GB)
(74) Representative: Brewster, Andrea Ruth
(86) International application number: PCT/GB2008/002925
(87) International publication number: WO 2009/030882

(56) References cited:
- WO-A-02/052357
- DE-U1- 29 800 650
- JP-A- 57 163 891
- US-B1- 6 335 692

## Description

### Field of the invention

This invention relates to a clock, in particular for use by or with young children.

### Background to the invention

Young children are unable to tell the time from a conventional analogue or digital clock face. Without the help of a carer, they often cannot tell whether it is time to go to bed or to get up, much less understand the timing of their daytime nap if they have one. Thus, if they wake before they are supposed to - for instance, in the early hours of the morning - they are unable to distinguish whether they should go back to sleep or get up to start the day, a dilemma which frequently results in disturbance to their carer, if not the rest of the household as well. This problem can be exacerbated by the changing seasons: if a child wakes early during the summer and it is already light, he can be tempted to get up before he should, whilst if he wakes during the winter and it is still dark, he may be confused into thinking he should sleep for longer than is appropriate.

A number of children's clocks have been described in the past, which attempt to address these issues. US-5,283,769 for example describes a clock which presents different appearances depending on whether it is day or night, the changes being achieved by the movement of mechanical parts - in the example depicted, a conventional clock face is combined with the image of a rabbit, the rabbit's eyes being open at times when the user should be awake and closed during designated sleep periods.

GB-2 259 160 describes a clock which indicates, by means of different colours, particular time zones during a day - the display may for example simulate traffic lights, with red, amber and green lights indicating the time zone and thus for example whether a child should remain in bed or get up.

GB-2 369 200 discloses a clock with a hand which moves around a conventional circular face, the face carrying one or more images or differently coloured portions to allow a user more readily to tell, from the position of the hand around the face, what time of day it is and how that relates to his daily routine.

In US-6,392,963, a clock is described in which a cylinder rotates within a housing and is viewable through a viewing opening, the cylinder displaying at least two different images as it rotates, to show the difference between different times of day.

WO-87/00309 discloses a clock for use by young children or others who are unable to tell the time, the clock having a liquid crystal display, under the control of a microprocessor, which displays symbols to help the user understand the time of day. These symbols can include for instance images of the sun or moon to indicate the difference between daytime and night-time, and/or symbols indicative of operations likely to be performed at specific times of the day.

US-2002/0126580 describes a children's timer and clock device which displays both a conventional clock face and also one of two different three-dimensional images dependent on whether it is a designated sleep time or not, rather in the way that a "weather house" might allow display of either of two models provided on a rotating platform, one indicating fine weather and the other bad weather.

In WO-96/39649, a clock is shown which has a twenty-four hour analogue clock face and hands, the daytime and night-time zones being distinguished for instance with images of the sun and the moon: this device also comprises moveable "activity buttons" which a user may place at different points on the perimeter so as to associate specific activities with corresponding times of day. US-6,416,216 describes the use of similar movable "event markers" with a timing device, which can indicate to a child a selected time period during which a particular activity or event is supposed to take place. An indicator hand moves to demonstrate the passage of time during the period.

US-2005/0117458 describes a child's clock which can display, for instance by means of a liquid crystal display (LCD) screen, two different images to indicate two different times of day, for example images of a person who is either awake or asleep, or of either the sun or the moon. Different coloured lights may be used to enhance the distinction between the two images.

US-5,044,961 discloses a timer designed to help young children learn the concept of time. The timer can be set to display, throughout a selected time period, a symbol indicative of an activity which the child is intended to carry out during that period, as well as a numerical countdown timer. It can also be used to indicate to a child how long a period remains before a specific activity can begin.

The clock disclosed in WO-02/054157 displays not only the time, but also a graphic indication of the timings of sunrise and sunset, by means of a horizontal dividing line across a circular face. The location of the dividing line can be altered dependent on the geographical location and time of year. A marker moves around the face during the day, and may change in colour as it passes across the dividing line.

WO-03/096126 describes a children's clock having a series of images around a clock face, each becoming "active" (for example, illuminated) in turn to indicate the passage of time throughout the day. Whilst each image is "active", further visual changes to that image show the passage of smaller intervals of time during the relevant period. Further changing images may be used to indicate different activities to be carried out at different times. In the examples shown, image changes may be achieved using relatively moving parts such as rotating discs, or electronically for instance via a computer screen.

It would be desirable to provide an alternative time keeping device which can indicate simply to a child whether it is "sleep" time or "wake" time, and ideally also, if the child wakes too early, how long he has slept for and/or how long he has still to sleep.

### Statements of the invention

According to a first aspect of the present invention there is provided a children's clock comprising (i) time keeping means, (ii) a display means, capable of displaying at least first and second images to differentiate between two different time periods, and (iii) control means for causing the display means to display either its first or its second image dependent on the time of day and/or on timing information input by a user, characterized in that the first image is adapted to alter to indicate the passage of time throughout a user-selected time period and wherein the control means is adapted to cause alteration of the first image with the passage of time during the user-selected time period.

The device may also comprise a countdown timer, the output from which may be used by the control means to help regulate the output of the display means.

Essentially, the device of the invention is a clock, but one which is able to demonstrate, by means of a very simple, easily interpreted display, the difference between two times of day, typically a "wake time" and a "sleep time".

The device may in particular be a children's clock, which is suitable and/or adapted and/or intended for use by or with children, in particular young children who are not yet able to tell the time. It may also be suitable for use by or with other types of user, for instance adults with learning difficulties, or those with impaired sight who find a conventional clock face or digital clock display difficult to read, especially in low light conditions.

The display means of the device suitably provides a visual display. It may generate one or more additional signals, for example audible signals, to supplement a visual display. In an embodiment, the display means comprises a screen, in particular an LCD (liquid crystal display) screen, more particularly a translucent LCD screen. The display means is suitably electrically and/or electronically controlled, preferably at least the latter. It may comprise a circular or approximately circular display such as a screen, to mimic a conventional clock face.

The display means is capable of generating at least two different images. Suitably one of these indicates "sleep time" (typically night-time) and one indicates "wake time" (typically daytime). For example, the "sleep time" image may include an image of the moon and/or stars; the "wake time" image may include an image of the sun. The control means of the device determines, based on data output from the time keeping means and optionally the countdown timer, and/or on timing information input by a user, which of the two images is to be displayed at any given time, and alters the status of the display means accordingly.

At least the first of the two different images - typically the "sleep time" image - is able to alter during a selected period of time to indicate the passage of time. The duration of this period may suitably be selected by a user, and may be monitored by the time keeping means and/or the countdown timer. The first image may change continuously as all or part of the selected time period elapses, and/or it may undergo one or more, suitably a series of, discrete changes at specific time intervals.

In an embodiment of the invention, the first image undergoes a series of n discrete changes at appropriate intervals throughout a user-selected "sleep time" period, where n is an integer preferably of from 2 to 24 or from 4 or 6 to 24, or from 4 or 6 to 16 or 20, for instance either 6 or 8 or 10 or 12, most suitably 12. The control means may act to effect changes in the first image at appropriate times during the selected period; it may for example do so at intervals of T/n, where T is the selected time period, thus ensuring that the changes occur at regular intervals, dependent on the length of the overall "sleep time" period. A user may then readily tell, from the first image, what proportion of the selected period has elapsed.

The first image may include two or more individual image elements, for instance n such elements where n is as defined above, which elements appear, disappear and/or alter in some other way each in turn to indicate the passage of successive time intervals.

In an embodiment of the invention, the first image indicates sleep time. It may for instance show two or more stars, for instance n stars where n is as defined above, and preferably the moon as well. The stars may be positioned around the perimeter of the image; they may for example be positioned similarly to the numerals around the perimeter of a traditional analogue clock face. Other images may naturally be used instead of stars. The stars or other images may appear one by one to indicate the passage of successive time intervals, or may disappear one by one, or may change in some other way, for example in colour and/or intensity.

The advantage of a display which can change in this relatively simple manner with the passing of a particular period of time is that it can be more readily interpreted by a user, such as a young child, who is unable to tell the time from a conventional analogue or digital clock face. The status of the display can for example indicate to a child whether it is "sleep time" or "wake time", night or day, dependent on whether the first or the second image is visible. During a period when the child should be asleep, the changes in the first image can provide a readily interpreted indication of how long he has left to sleep and can signal the approach of the time when he is allowed to get out of bed. Simple visual displays can thus provide child-friendly information without the need for a conventional clock face or for numerical displays.

The second image which the display means is capable of displaying will typically be a "wake time" (daytime) image. It too may be capable of altering to indicate the passage of time during a selected period. Suitably it may include one or more elements which can be altered by the control means to indicate the passage of time during a particular period. This can be used to indicate the passage of for instance a daytime nap period, the duration and/or timing of which can again suitably be selected by the user.

For example, the second image may include an image of the sun with a plurality of rays around it, and the rays may in turn appear, disappear or alter to indicate the passage of intervals of time. Preferred aspects of this type of display may be as described above in connection with the changing first image; in particular, there may be n changeable elements such as rays of sunshine, and the control means may effect changes during a selected time period T at proportional intervals of T/n. Thus if a child wakes before the end of a selected daytime nap period, he can easily tell roughly how long he still has to remain in bed.

In an embodiment neither the first nor the second image includes an image of a conventional clock face, whether analogue or digital. In an embodiment neither of the two images (and suitably not the device as a whole) includes a mechanically moving part, in particular a moving clock "hand" as on a conventional analogue clock face. In an embodiment neither includes any numerals and/or letters. In an embodiment the two images differ from one another in at least one respect other than their respective colours. In an embodiment the first image completely replaces the second and vice versa; in other words, they do not share any common features, and the entire display suitably changes between the first and the second image. In an embodiment at least one of the first and second images, suitably both, is two-dimensional rather than three-dimensional. In an embodiment, each of the two images occupies the whole or a substantial part of (for example 95 or 90 or 80 % or more of the surface area of) the display means, so that again one preferably entirely replaces the other when the display is changed between the first and the second images.

The device of the invention may include one or more lights to illuminate the display means. These may change, for instance in colour and/or intensity, so as further to differentiate between the first and second images and thus between for example "sleep time" and "wake time" periods. The device may for instance include one or more, preferably a plurality of, LEDs (light emitting diodes) or similar low powered light sources. In an embodiment, the device includes light source(s) of two different colours, suitably one for use with each of the first and second images. For example, a cool colour such as blue may be used to indicate "sleep time" and a warm colour such as yellow to indicate "wake time".

Thus in an embodiment, the device includes one or more, preferably a first array of, lights of a first colour, and one or more, preferably a second array of, lights of a second colour. The first and second arrays may be arranged interspersed with one another, so that either array may be used to light the whole of the display means. The control means of the device may then act to switch on either or both of the (arrays of) lights, dependent on the status of the display means, which in turn will depend on whether it is "sleep time" or "wake time". The device may include lights, or arrays thereof, of more than two different colours.

Suitable combinations of coloured lights may be used to generate one or more further "secondary" colours in and/or around the display means. For example, the device may include two different coloured lights, or arrays thereof, which when illuminated together generate at least one secondary colour, which secondary colour may be used, in combination with the first and/or second image generated by the display means, to indicate an intermediate period of time between the selected sleep time and wake time periods, for example a kind of "sunrise" or "sunset" period at the transition between the two. A combination of blue and yellow LEDs, for example, has been found when both are illuminated together to generate a soft pink colour which can be appropriate for signaling such "sunrise" and "sunset" periods.

The one or more lights, or arrays thereof, may be positioned behind the display means, for example behind an LCD screen. Instead or in addition, one or more lights, suitably a plurality thereof, may be positioned adjacent the display means, for instance around its perimeter.

The device may include a diffuser, so as to "soften" the light emitted by light bulbs, LEDs or other similar light sources. Thus, for example, it may include a translucent panel between the light(s) and the display means, and/or between the light(s) and the user. When relatively low powered lights such as LEDs are used in this way, they have the additional advantage that the lit device can then emit a gentle, low level light and can be used as a nightlight for instance during the hours of darkness or in areas of low level lighting.

The light(s) of the device may be variable in output, such that they can for instance be dimmed and/or increased in intensity either by the control means and/or by the user.

The time keeping means of the device suitably comprises a clock mechanism. The clock mechanism may be analogue or digital, preferably the latter. It is suitably electrically and/or electronically controlled, and its output will be fed to the control means of the device.

The countdown timer, if present, is suitably also electrical and/or electronic in operation. It too may be analogue or digital, preferably digital. It is able to monitor and signal the end of, and suitably the passage of, a selected period of time, typically a period of "sleep time" (which may be a "daytime nap time") selected by a user.

The control means of the device is suitably also electrical and/or electronic in operation. It controls operation of the display means based on signals emitted by the time keeping means and optionally the countdown timer, and/or based on user-selected variables such as a selected period of "sleep time" and/or a selected start and/or finish time for a period of sleep time.

Where the device includes electrical or electronic components, it may be powered by mains and/or battery power. Suitably it is capable of being powered at least by mains (AC) electricity since it will need to provide a display for prolonged periods of time, for example during the night. In an embodiment, the device is capable of being powered by mains electricity but is also capable of operating, for at least a period of time, on DC current from a backup battery or other DC power source. This allows the device still to be used for instance during a mains power cut, when travelling or in situations, for example on a family camping holiday, where mains electricity may not be readily available. Hence, the device suitably includes a battery compartment for housing a battery or other DC power source, as well as electrical connection means for connecting it to a mains electricity supply.

The device of the invention may also be capable of generating a clock display, which may be analogue or digital but is preferably numerical and more preferably digital. The clock display may constitute a third image which the display means is capable of displaying when caused to do so by the control means. It suitably represents the output of the time keeping means.

The device may be capable of generating an alarm to signal the end of a user-selected period of time, or the arrival of a user-selected time of day. The alarm signal may comprise a visual or audible or any other suitable signal, preferably audible. It may be adapted for use by young children: it may for example play a tune such as a nursery rhyme. The display means may be capable of displaying a particular image as part of the alarm signal. The alarm function may incorporate a "snooze" facility, as is known in more conventional alarm clocks.

The display means may also be capable of displaying other relevant information to a user, in particular to an adult user, for example information regarding time periods selected, display modes, alarm times and the like.

A device according to the invention suitably includes one or more user-operable controls, by which a user may select criteria such as the duration, start or finish time of a period of sleep, the time(s) for transition(s) between sleep and wake time periods, the nature of image displayed by the display means (for example whether to display the time of day as well as or instead of the first and/or second images), etc... The user-operable controls may include conventional control elements such as buttons or dials. They will be in communication with the control means of the device, which in turn will control the output of the display means.

The device is suitably small and compact, so as to be readily portable and easy to use on a child's bedside table or shelf. It may for example have a height of from 100 to 170 mm or from 110 to 160 mm, a width of from 90 to 150 mm or from 100 to 140 mm and/or a depth of from 30 to 110 mm or from 40 to 100 mm or from 50 to 90 mm. Its working components may be provided in a casing, made for instance from a rigid plastics material such as ABS (acrylonitrile butadiene styrene) or HIPS (high impact polystyrene). The casing may include one or more panels of a transparent or translucent material, for example glass or more preferably a plastics material such as perspex or polycarbonate, to allow visibility of components such as the display means and any lights included in the device.

Suitably, the device includes a base housing the control means, the time keeping means and the countdown timer if present, and a front panel which includes the display means and optionally one or more user-operable control elements such as buttons or dials.

The device of the invention may be supplied in combination with a book containing one or more images corresponding to those which can be displayed by the display means. The book may contain a narrative, perhaps in the form of a story, to help explain the difference between daytime and night-time and/or how the device operates to distinguish between the two. A carer may then read the book aloud to a child when tucking him up in bed, for example as a bed-time story.

The narrative may contain one or more cues, indicating to the reader appropriate time(s) at which to change the display on the device of the invention, for example from the wake time image to the sleep time one, or from the wake time image to an intermediate "sunset" image.

A second aspect of the invention thus provides a device according to the first aspect, in combination with a book containing one or more images corresponding to those which can be displayed via the display means of the device. The book preferably contains an associated narrative, explaining the significance of the image(s) and/or the operation of the device of the invention, as described above.

Preferred features of each aspect of the invention may be as described in connection with any of the other aspects.

Throughout the description and claims of this specification, the words "comprise" and "contain" and variations of the words, for example "comprising" and "comprises", mean "including but not limited to", and do not exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Other features of the present invention will become apparent from the following examples. Generally speaking the invention extends to any novel one, or any novel combination, of the features disclosed in this specification (including any accompanying claims and drawings). Thus features, integers, characteristics, compounds, chemical moieties or groups described in conjunction with a particular aspect, embodiment or example of the invention are to be understood to be applicable to any other aspect, embodiment or example described herein unless incompatible therewith.

Moreover unless stated otherwise, any feature disclosed herein may be replaced by an alternative feature serving the same or a similar purpose.

The present invention will now be described by way of example only and with reference to the accompanying illustrative drawings.

### Brief description of the drawings

Figures 1 to 5 are perspective views, from the front and one side in each case, of a time keeping device according to the first aspect of the invention, showing different images being displayed on the display screen of the device;
Figure 6 is a vertical section through the device of Figures 1 to 5, showing the arrangement of lights inside the device;
Figure 7 is an exploded perspective view of the device of Figures 1 to 6, showing some of its component parts;
Figures 8 and 9 are a rear view and side view respectively of the device of Figures 1 to 7; and
Figure 10 is a perspective view of a time keeping device and associated book (not to scale), as provided by the second aspect of the invention.

All figures are schematic.

### Detailed description

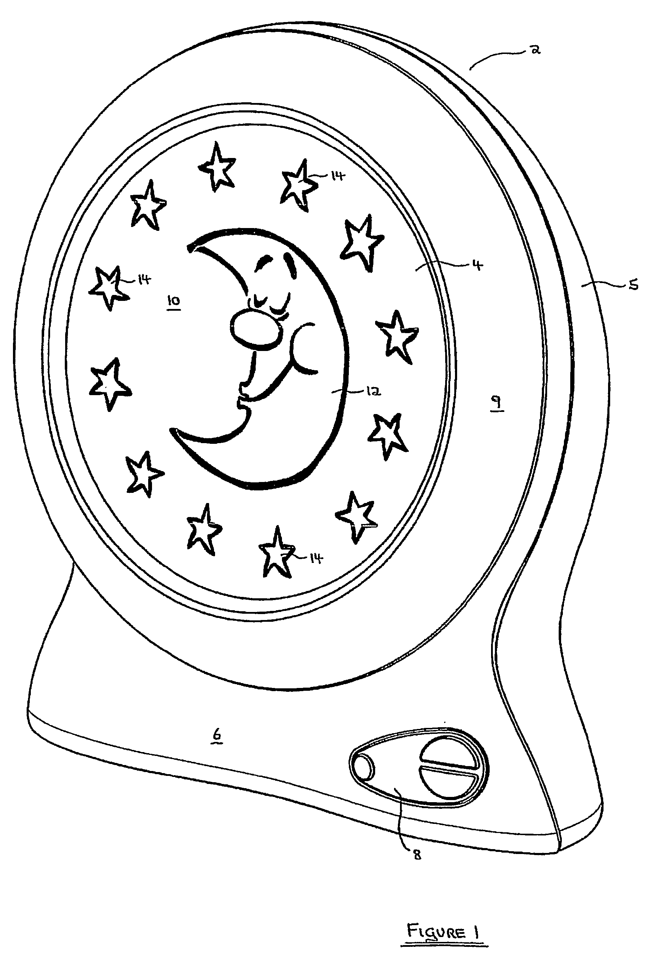

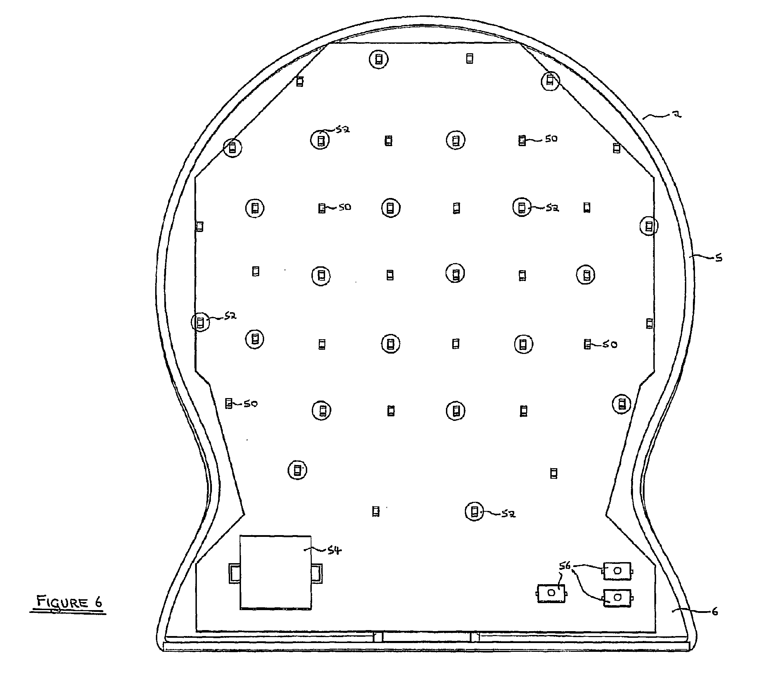

In Figure 1, a time keeping device according to the invention, in this case a children's clock, is generally indicated at 2. The clock includes a circular LCD display screen 4 set in a casing 5 which includes a base portion 6, and has user-operable control buttons indicated generally at 8. The annular portion 9 around the perimeter of the screen 4 can be illuminated by LED lamps, and the screen can also be illuminated from behind, as will be described in more detail below, in particular in connection with Figure 6.

The casing 5 may be made, for example, from a rigid plastics material such as ABS or HIPS.

The display screen 4 is displaying a first image 10, indicative of a first time period, in this case night-time or "sleep time". This shows the moon 12, with a face although with its eyes closed to encourage children to think of sleep, surrounded by twelve stars 14 at intervals and/or positions roughly corresponding to those of the numerals around a conventional analogue clock face.

The clock includes control means (not shown) in its base region, in this case electronic circuitry and an associated microprocessor, by which to control the images displayed on the screen 4 in response to signals from an associated digital clock mechanism and selections input by a user via the control buttons 8.

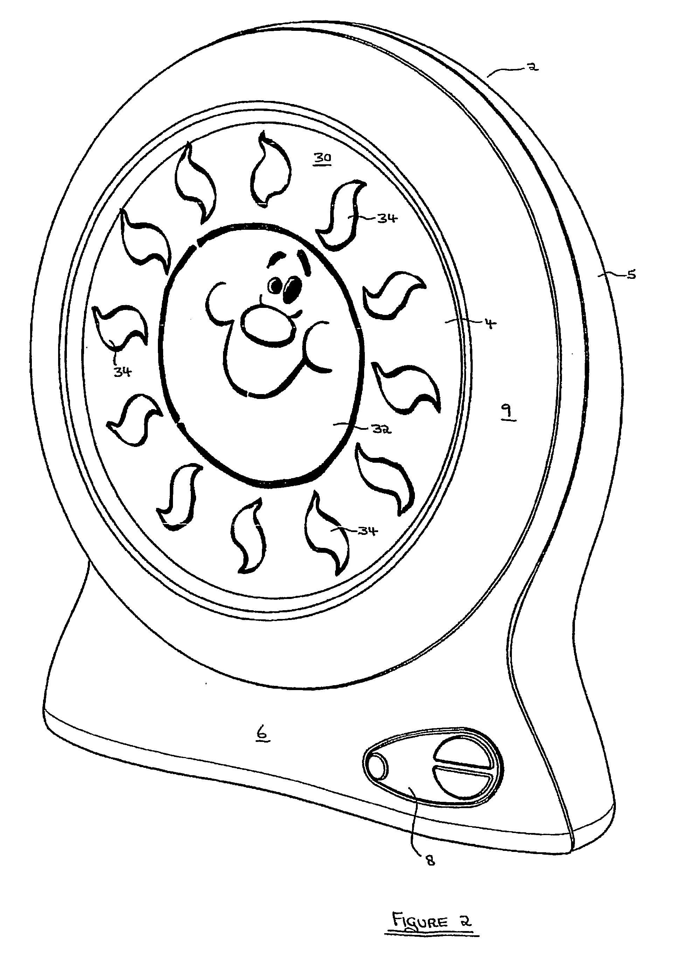

Figure 2 shows how the display screen 4 can also display a second image 30, indicative of a second time period, in this case daytime or "wake time". This image is essentially of the sun 32, with a wide awake, smiley face designed to appeal to young children and twelve rays 34 emanating from it.

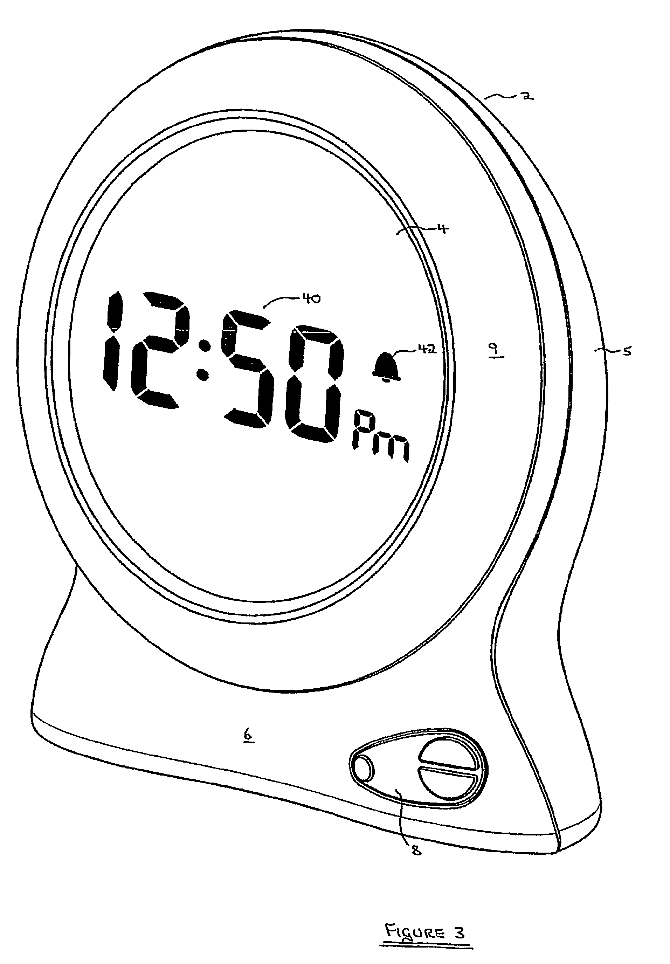

Figure 3 shows how the display screen 4 can display a third image 40, namely the numerical output from the digital clock mechanism 22 which is included in the base 6 and connected to the electronic controls of the device. Thus, the device is able to display a traditional numerical time output should the user wish to check the time of day.

The display screen is also capable of displaying other information that may be relevant to the user (not shown in the figures, other than an alarm symbol 42 to indicate that in this case an alarm signal has been requested), for example the mode of operation of the clock at any given time, or a selected start or finish time or duration for a user-selected time period (for example, a selected "sleep time" period), or a selected time for an alarm signal.

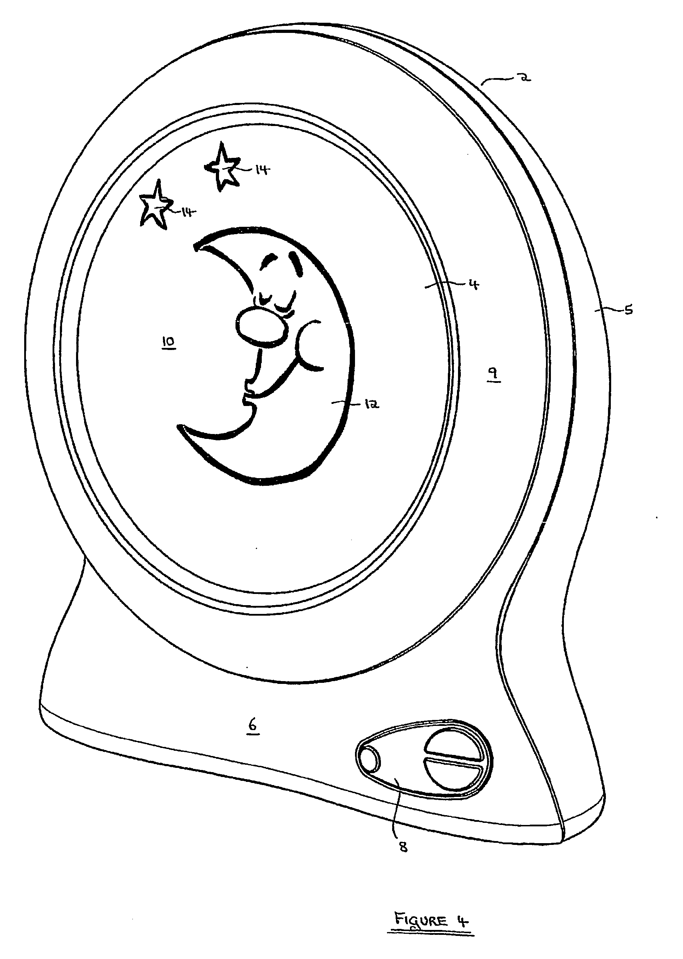

Figure 4 shows how the first image 10 is able to alter during the course of a selected sleep time period, under control of the electronic control means of the device. The selected period is divided by the control means into twelve equal intervals of time; as each such interval passes, one of the stars 14 disappears from around the edge of the display. On the device shown in Figure 4, for example, ten of the twelve stars have disappeared and only two remain, indicating that ten twelfths of the selected sleep time period have elapsed.

The stars disappear in turn, beginning with that corresponding roughly in position to the number one on a conventional clock face and moving clockwise around the display, until all twelve stars have disappeared. At this point the control means switches the display screen 4 to show its second image 30. In this way, the passage of time during a selected sleep time period is indicated in a simple visual manner, allowing even a child who cannot tell the time to gauge roughly how long he has left to sleep.

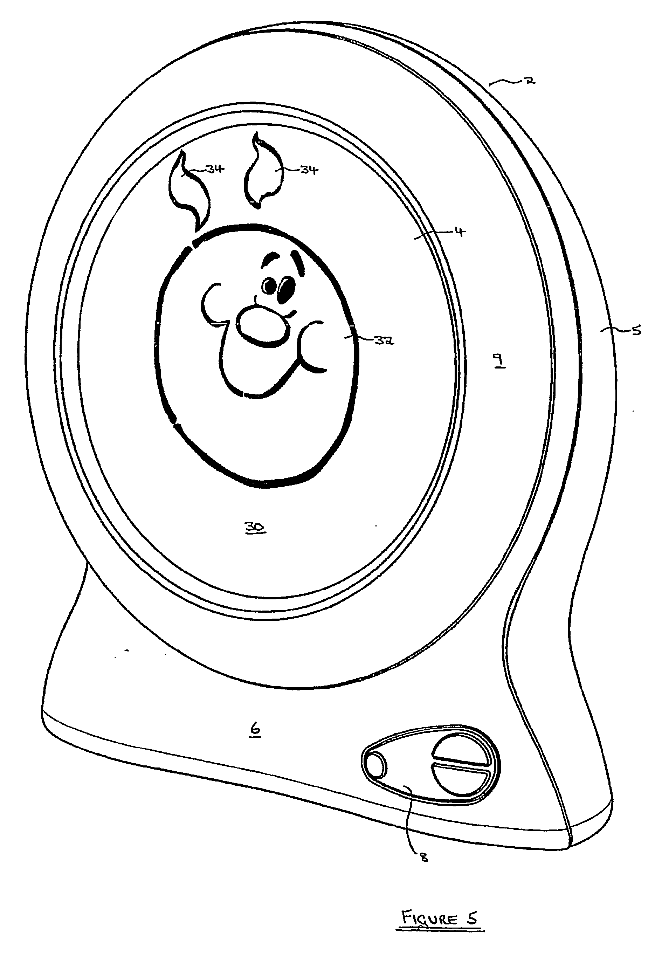

Figure 5 shows how, in an embodiment of the invention, the second image 30 is also able to alter during the course of a user-selected time period, for example a daytime nap period. In this case, the twelve rays of sunshine 34 disappear one at a time (again, moving clockwise around the display from position one to position twelve) to indicate the passage of time during the selected nap period. On the device shown in Figure 5, only two of the rays 34 remain, indicating that ten twelfths of the selected daytime nap period have elapsed.

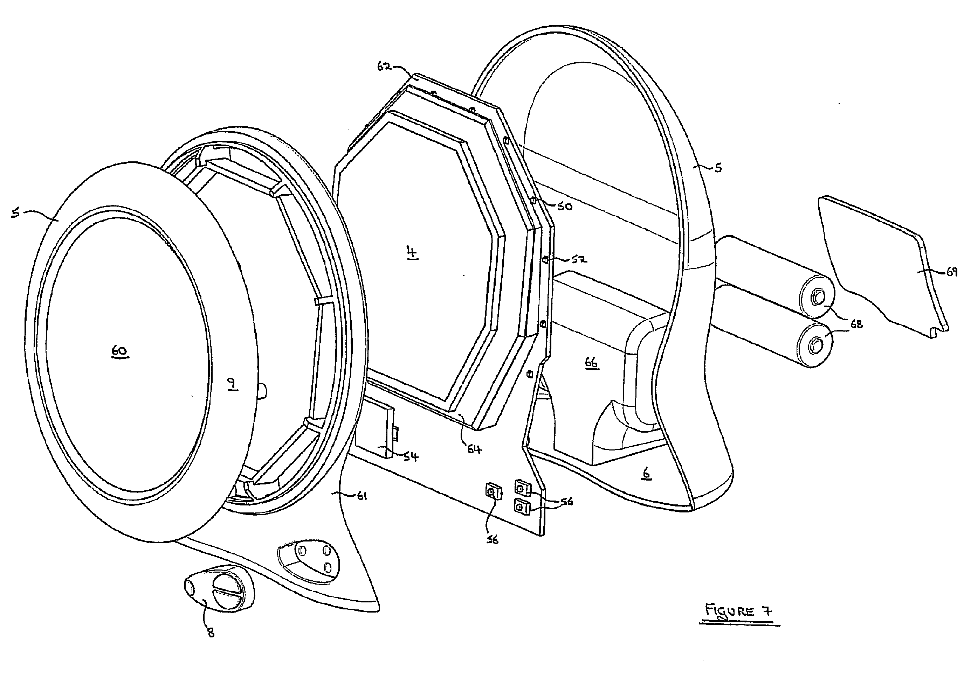

The device of Figures 1 to 5 includes different coloured lighting to help distinguish between the sleep time and wake time images. This is provided by LED lamps which are located both behind and around the LCD screen 4. Their arrangement is shown in Figure 6, which is a vertical section through the device of Figures 1 to 5, its exact position being clear by reference to Figure 7.

Referring to Figure 6, the device includes an array of LED lamps of a first colour, shown for instance at 50, interspersed with a similar array of LED lamps of a second colour, shown circled as for instance at 52. In this case the first colour is blue and the second yellow. The lamps 50 and 52 are positioned primarily behind the display screen 4, but it can be seen that some of them are located in a region corresponding to the annular portion 9 which surrounds the screen; these are used to illuminate the perimeter of the display.

The item labelled 54 in Figure 6 is a speaker, for generating audible signals for instance when the device is used as an alarm clock. The items labelled 56 are user-operable control switches, associated with the buttons 8; they may for instance include an "enter" key and up and down cursor keys.

When the screen displays the first, sleep time, image, the control means switches on the blue LED lamps 50. This provides a soft blue, moonlit-type appearance to the device display. When the screen displays the second, wake time, image, the yellow LED lamps 52 are illuminated, thus providing a soft yellow, "sunshiny" glow.

The device can also display one or more "intermediate" images, indicating periods of transition between the wake and sleep time periods. This is achieved by illuminating either the sleep time image 10 or the wake time image 30 with a different coloured background, in this case by illuminating both the blue and the yellow LED lamps together to give, overall, a soft pink background colour to the display. Thus, a "sunset" period is used to mark the transition from wake time to sleep time, during which the sunshine image 30 is displayed with a pink background. A "sunrise" period similarly marks the transition from sleep to wake time, displaying the moon and stars image 10 with a pink background.

Such intermediate displays may appear for a fixed period of time or for a user-selectable period.

LED lights are relatively low power and provide a soft light. The device can thus be used as a nightlight during the night or in other low light conditions, for example when the curtains are shut for a child to have an afternoon nap.

Figure 7 shows in more detail some of the constituent components of the device 2. It comprises a casing 5, the front and back sections of which are seen separately in the figure. The front section of the casing includes the annular portion 9, made from a translucent plastics material, which holds a transparent front cover 60, for example made from a plastics material such as perspex or polycarbonate. This helps to protect the translucent LCD screen 4. The annular portion 9 clips into place on the front supporting section 61 of the casing, which is also shaped to accommodate the user-operable control buttons 8.

Behind the screen 4 the LED lamps 50 and 52 are provided on a panel 62. A translucent diffuser panel 64, again typically of a plastics material such as perspex or in this case polycarbonate, or alternatively of glass, is positioned in front of the LED lamps and serves to soften the light they produce.

The electronic and electrical control means of the device (not shown) are provided on the rear of the panel 62. The control means incorporate a digital clock mechanism and an electronic countdown timer. They control operation of the LED lamps and the LCD screen in response to information input by the user and the output of the digital clock and timer.

The rear section of the casing 5 includes a battery compartment 66, so that two DC batteries 68 may be used as an alternative or back-up power source, for example during power cuts or so as to allow the device to be used in a range of locations or whilst traveling. A rear battery panel 69 may be screwed into the rear of the casing so as to close the battery compartment 66.

The device also includes (not shown in the figures) an electrical connection port via which it can be electrically connected to a mains electricity supply using a conventional electrical cable.

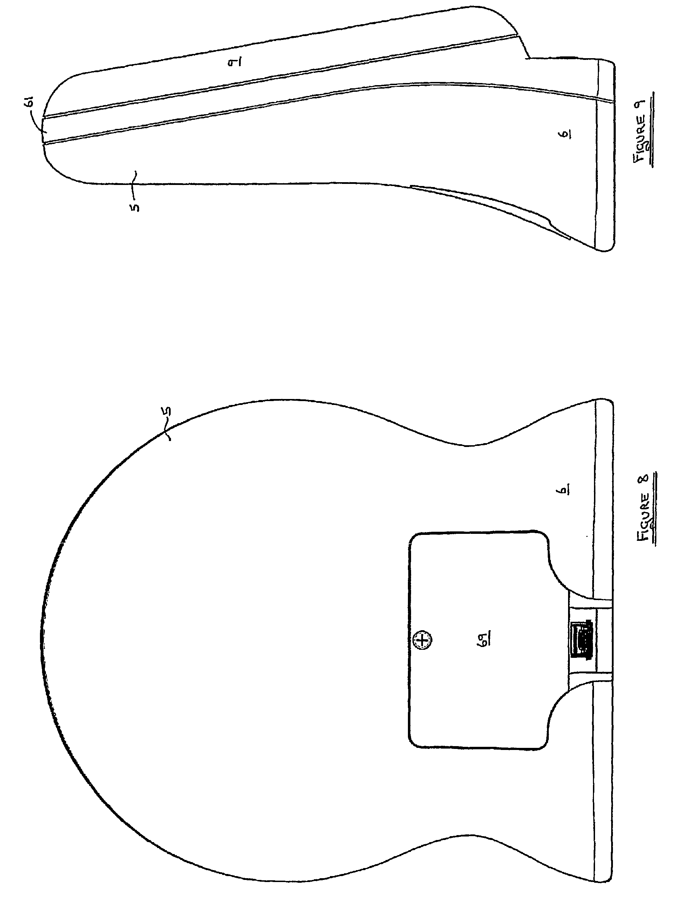

Figures 8 and 9 show, respectively, a rear view and a side view of the device of Figures 1 to 7.

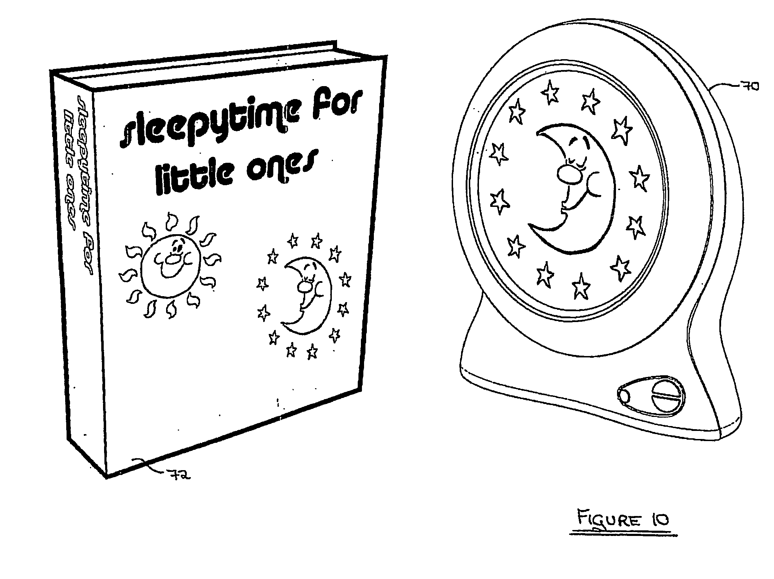

Figure 10 shows a clock 70 in accordance with the invention, in this case the same as that of Figures 1 to 9, supplied together with a children's storybook 72. The book contains images corresponding to those displayable on the LCD screen 4, in particular the moon and stars image 10 and the sunshine image 30, together with a narrative explaining their significance. The narrative takes the form of a story which can be read to a child, for instance as part of a bedtime story routine, to help explain the operation of the clock and the meaning of the images it displays.

The device of Figures 1 to 10 may be used as follows. Firstly the (typically adult) user sets the digital clock to the correct time, using the buttons 8 and, for reference, the 24-hour digital clock display 40 shown in Figure 3. The user then selects the times at which "sleep time" is to begin and end, ie, typically the child's bedtime and getting-up time (this may be done simply by inputting a desired start or finish time, together with a desired sleep time duration). He may also select start and/or finish times and/or a duration for one or more additional "sleep time" periods, for instance for a daytime nap. These selections can be displayed on the digital clock screen 40 of the device both during the selection process and, at the user's choice, at any time afterwards, the nature of the display being variable in response to the controls 8.

The device may then be set, again using the buttons 8, to its "automatic" mode. It can suitably be placed on a table or shelf beside the child's bed, in the same manner as a traditional alarm clock, or if appropriate hung from a wall in the vicinity of the bed.

The control means of the device will determine, from the associated digital clock and the timings input by the adult user, which of the two main images 10 and 30 (sleep time or wake time) is displayed on the LCD screen 4, dependent on the current time of day. For example, if it is currently daytime, the sunshine image 30 will be displayed, with the associated yellow LED lights 52 illuminated. A child looking at the clock can tell from this that it is daytime, ie, time to be awake and out of bed.

This image remains until the start of the selected sleep time, at which point the LCD screen is switched to display the moon and stars image 10, and the blue LED lights 50 are illuminated instead of the yellow ones. Again a child looking at the clock can tell that it is now time to sleep. During the designated sleep time period, the passage of time will be displayed in a simple visual "countdown" format, the stars 14 disappearing one by one as described above until, at the end of the sleep time period, all have disappeared from the screen. At that point, the display will switch again to the sunshine image and yellow lighting.

At any time, the user may switch the screen 4 (using the control buttons 8) to display a digital clock read-out and/or other desired information such as selected sleep times or alarm times.

So-called "sunrise" and/or "sunset" periods may also be activated, intermediate the designated sleep time and wake time periods. The duration and/or timing of such intermediate periods may be selected by the user or may alternatively be fixed by the controls of the device. During an intermediate period, the control means causes both the yellow and the blue LED lamps to be illuminated together, creating a soft pink glow. During the "sunset" period, before the start of a sleep time period, the sunshine image 30 may for instance be displayed on a pink background, whilst during the "sunrise" period, before the start of the wake time period, the moon and stars image 10 may continue to be displayed but with pink lighting.

If a daytime nap period has been selected, the screen 4 may again change during that period. In the present case, it will display the sunshine image 30 with yellow lighting, although the lighting may be dimmed for this purpose, but during the nap period the image will change to indicate the passage of time, the sun's rays 34 either disappearing, appearing or changing in some other way, each in turn, during the period.

The user may choose, using the buttons 8, for an alarm to sound when the end of a selected sleep time period is reached. The screen 4 may also display a different image to accompany the alarm signal.

Where the clock is supplied with an accompanying book, as depicted in Figure 10, the child's carer may read the book to the child on tucking him up in bed at night or prior to a daytime nap. The carer and child may together look at the images in the book, and discuss their relevance to the operation of the clock, and their significance to the distinction between sleep time and wake time periods. Reading the book together can help to reinforce this distinction in the child's mind, and to explain how the clock works, thus helping the child to interpret the images which it displays. The book may contain visual cues, reminding the user to alter settings on the clock at appropriate points whilst reading, for instance to activate the "sunset" intermediate display when close to the end of the book so that the child can recognise the approach of the designated sleep time period.

During sleep time periods, the clock may be left on as a nightlight, its LED lamps providing a soft, low powered level of lighting to help reassure the child should he wake and to facilitate access for the carer if needed.

The user may if he wishes alter the output power of the LED lamps 50 and 52, using the control buttons 8. He may for instance dim them to a lower intensity during a sleep time period.

The device may also be set to revert to a "standby" mode if its controls are not activated in any way for a predetermined period of time (for example 30 or 60 or 120 minutes, and/or a user-selectable period). In the standby mode, the LED lamps and/or the LCD screen, suitably at least the former, may be switched off so as to conserve power. This may in particular be appropriate if the device is not touched during daylight hours. During sleep time periods, however, it is possible to set the device not to revert to standby, if for example it is to be used as a nightlight.

The controls of the device may be arranged so as to be difficult for a young child to operate. They may for instance require a certain specific combination of key strokes, or the input of a particular code, in order to activate them. This can help prevent a child from accidentally, or possibly intentionally, altering the settings of the clock.

## Claims

1. A children's clock (2) comprising (i) time keeping means, (ii) a display means (4), capable of displaying at least first and second images (10, 30) to differentiate between two different time periods, wherein one of the first and second images indicates a sleep time and the other indicates a wake time, and (iii) control means for causing the display means to display either its first or its second image dependent on the time of day and/or on timing information input by a user; **characterized in that** the first image is adapted to alter to indicate the passage of time throughout a user-selected time period and wherein the control means is adapted to cause alteration of the first image with the passage of time during the user-selected time period.

2. A children's clock according to claim 1, additionally comprising a countdown timer, the output from which is useable by the control means to regulate the output of the display means.

3. A children's clock according to any one of the preceding claims, wherein the display means (4) comprises a translucent LCD screen.

4. A children's clock according to any one of the preceding claims, wherein one or both of the first image (10) and second image (30) undergoes one or more discrete changes at specific time intervals during the selected time period.

5. A children's clock according to claim 4, wherein the one or both of the first image (10) and second image (30) undergoes a series of n discrete changes at appropriate intervals throughout the user-selected time period, where n is an integer of from 2 to 24.

6. A children's clock according to claim 5, wherein the control means acts to effect changes in one or both of the first image (10) and second image (30) at intervals of T/n, where T is the selected time period.

7. A children's clock according to any one of the preceding claims, wherein one or both of the first image (10) or second image (30) includes two or more individual image elements (14,34), which elements appear, disappear and/or alter in some other way each in turn to indicate the passage of successive time intervals.

8. A children's clock according to claim 7, wherein one or both of the first image and second image includes n individual image elements, where n is an integer of from 2 to 24.

9. A children's clock according to any one of the preceding claims, which includes one or more lights (50,52) to illuminate the display means and wherein the lights change so as further to differentiate between the first and second images.

10. A children's clock according to claim 9, which includes a first array of lights of a first colour (50), and a second array of lights of a second colour (52), one for use with each of the first and second images, the first and second arrays being arranged interspersed with one another, so that either array may be used to light the whole of the display means.

11. A children's clock according to claim 10, which includes two different coloured lights, or arrays thereof, which when illuminated together generate at least one secondary colour, which secondary colour may be used, in combination with the first and/or second image displayed by the display means, to indicate an intermediate period of time between selected sleep time and wake time periods.

12. A children's clock according to any one of claims 9 to 11, wherein the one or more lights, or arrays thereof, are positioned behind the display means.

13. A children's clock according to any one of claims 9 to 12, wherein the light(s) are variable in output.

14. A children's clock according to any one of the preceding claims, wherein the display means is capable of displaying a third image which is a clock display.

15. A children's clock (2) according to any one of the preceding claims, in combination with a book (72) containing one or more images corresponding to those which can be displayed by the display means of the device.

## Patentansprüche

1. Kinderuhr (2) mit (i) Zeitmesseinrichtungen, (ii) einer Anzeigeeinrichtung (4), die ein erstes und/oder zweites Bild (10, 30) anzeigen kann, um einen Unterschied zwischen zwei verschiedenen Zeiträumen zu machen, wobei eines der Bilder, das erste Bild oder das zweite Bild, eine Zeit des Schlafens anzeigt, und das andere eine Zeit des Wachseins anzeigt, und (iii) Steuereinrichtungen, um die Anzeigeeinrichtung entweder ihr erstes oder ihr zweites Bild je nach der Tageszeit und/oder durch einen Benutzer eingegebene Zeitgeberinformation anzeigen zu lassen; **dadurch gekennzeichnet, dass** das erste Bild dazu angepasst ist, sich zu verändern, um das Verstreichen von Zeit über einen benutzergewählten Zeitraum anzuzeigen, und wobei die Steuereinrichtung dazu angepasst ist, eine Veränderung des ersten Bilds mit dem Verstreichen von Zeit während des benutzergewählten Zeitraums zu bewirken.

2. Kinderuhr nach Anspruch 1, zusätzlich einen Rückwärtszählerzeitgeber umfassend, dessen Ausgang durch die Steuereinrichtung verwendet werden kann, um den Ausgang der Anzeigeeinrichtung zu regulieren.

3. Kinderuhr nach einem der vorhergehenden Ansprüche, wobei die Anzeigeeinrichtung (4) eine durchsichtige LCD-Anzeige umfasst.

4. Kinderuhr nach einem der vorhergehenden Ansprüche, wobei das erste Bild (10) und/oder zweite Bild (30) eine oder mehrere diskrete Veränderungen in bestimmten Zeitintervallen während des gewählten Zeitraums erfährt.

5. Kinderuhr nach Anspruch 4, wobei das erste Bild (10) und/oder das zweite Bild (30) eine Reihe von n diskreten Veränderungen in geeigneten Abständen über den benutzergewählten Zeitraum erfährt, wobei n eine ganze Zahl von 2 bis 24 ist.

6. Kinderuhr nach Anspruch 5, wobei die Steuereinrichtung so funktioniert, dass in Abständen von T/n Veränderungen im ersten Bild (10) und/oder zweiten Bild (30) bewirkt werden, wobei es sich bei T um den benutzergewählten Zeitraum handelt.

7. Kinderuhr nach einem der vorhergehenden Ansprüche, wobei das erste Bild (10) und/oder zweite Bild (30) zwei oder mehr einzelne Bildelemente (14, 34) enthält, die jeweils der Reihe nach erscheinen, verschwinden und/oder sich auf irgendeine andere Weise verändern, um das Verstreichen aufeinanderfolgender Zeitabstände anzuzeigen.

8. Kinderuhr nach Anspruch 7, wobei das erste Bild und/oder zweite Bild n einzelne Bildelemente enthält, wobei n eine ganze Zahl von 2 bis 24 ist.

9. Kinderuhr nach einem der vorhergehenden Ansprüche, die eine oder mehrere Leuchten (50, 52) zum Beleuchten der Anzeigeeinrichtung umfasst, und wobei sich die Leuchten verändern, um einen weiteren Unterschied zwischen dem ersten und zweiten Bild zu machen.

10. Kinderuhr nach Anspruch 9, die eine erste Anordnung von Leuchten mit einer ersten Farbe (50) und eine zweite Anordnung von Leuchten mit einer zweiten Farbe (52) umfasst, wobei eine zur Verwendung mit dem ersten bzw. zweiten Bild bestimmt ist, wobei die erste und zweite Anordnung miteinander vermischt angeordnet sind, so dass jede Anordnung dazu verwendet werden kann, die gesamte Anzeigeeinrichtung zu beleuchten.

11. Kinderuhr nach Anspruch 10, die zwei verschiedenfarbige Leuchten oder Anordnungen von diesen umfasst, die, wenn sie zusammen strahlen, mindestens eine sekundäre Farbe erzeugen, die in Kombination mit dem von der Anzeigeeinrichtung angezeigten ersten und/oder zweiten Bild dazu verwendet werden kann, einen Zwischenzeitraum zwischen gewählten Schlafenszeit- und Wachseinszeiträumen anzuzeigen.

12. Kinderuhr nach einem der Ansprüche 9 bis 11, wobei die eine oder mehreren Leuchten oder Anordnungen von diesen hinter der Anzeigeeinrichtung angeordnet ist/sind.

13. Kinderuhr nach einem der Ansprüche 9 bis 12, wobei die Leuchte/n von variabler Leistung ist/sind.

14. Kinderuhr nach einem der vorhergehenden Ansprüche, wobei die Anzeigeeinrichtung ein drittes Bild anzeigen kann, bei dem es sich um eine Uhrzeitanzeige handelt.

15. Kinderuhr (2) nach einem der vorhergehenden Ansprüche in Kombination mit einem Buch (72), das ein oder mehrere Bild/er enthält, das/die denjenigen entspricht/entsprechen, die von der Anzeigeeinrichtung der Vorrichtung angezeigt werden können.

## Revendications

1. Horloge (2) pour enfants comprenant (i) un moyen de mesure du temps, (ii) un moyen d'affichage (4) pouvant afficher au moins des première et deuxième images (10, 30) afin de différencier deux périodes de temps différentes, l'une des première et deuxième images indiquant une période de sommeil et l'autre indiquant une période de réveil, et (iii) un moyen de commande servant à amener le moyen d'affichage à afficher sa première ou sa deuxième image en fonction du moment de la journée et/ou d'informations de temps entrées par un utilisateur ; **caractérisée en ce que** la première image est conçue pour changer afin d'indiquer le passage du temps au cours d'une période sélectionnée par l'utilisateur et dans laquelle le moyen de commande est conçu pour entraîner un changement de la première image avec le passage du temps au cours de la période sélectionnée par l'utilisateur.

2. Horloge pour enfants selon la revendication 1, comprenant en plus un dispositif de comptage à rebours, dont la sortie peut être utilisée par le moyen de commande afin de réguler la sortie du moyen d'affichage.

3. Horloge pour enfants selon l'une quelconque des revendications précédentes, dans laquelle le moyen d'affichage (4) comprend un écran LCD transparent.

4. Horloge pour enfants selon l'une quelconque des revendications précédentes, dans laquelle l'une des première (10) et deuxième (30) images, ou les deux, subit une ou plusieurs modifications distinctes à intervalles de temps spécifiques au cours de la période de temps sélectionnée.

5. Horloge pour enfants selon la revendication 4, dans laquelle l'une des première (10) et deuxième (30) images, ou les deux, subit une série de n modifications distinctes à intervalles appropriés au cours de la période sélectionnée par l'utilisateur, n étant un entier compris entre 2 et 24.

6. Horloge pour enfants selon la revendication 5, dans laquelle le moyen de commande sert à effectuer des modifications dans l'une des première (10) et deuxième (30) images, ou les deux, à intervalles de T/n, T étant la période sélectionnée.

7. Horloge pour enfants selon l'une quelconque des revendications précédentes, dans laquelle l'une des première (10) et deuxième (30) images, ou les deux, comprend deux, ou plus, éléments d'image individuels (14, 34), lesdits éléments apparaissant, disparaissant et/ou changeant d'une autre façon chacun à leur tour pour indiquer le passage d'intervalles de temps successifs.

8. Horloge pour enfants selon la revendication 7, dans laquelle l'une des première et deuxième images, ou les deux, comprend n éléments d'image individuels, n étant un entier compris entre 2 et 24.

9. Horloge pour enfants selon l'une quelconque des revendications précédentes, qui comprend une ou plusieurs lumières (50, 52) pour éclairer le moyen d'affichage et dans laquelle les lumières changent de manière à différencier les première et deuxième images.

10. Horloge pour enfants selon la revendication 9, dans laquelle un premier groupe de lumières d'une première couleur (50) et un second groupe de lumières d'une deuxième couleur (52), l'un à utiliser avec chacune des première et deuxième images, les premier et second groupes étant mutuellement intercalés, de sorte que l'un ou l'autre des groupes puisse être utilisé pour éclairer l'ensemble du moyen d'affichage.

11. Horloge pour enfants selon la revendication 10, qui comprend deux lumières, ou groupes correspondants, de couleurs différentes, qui, lorsqu'elles éclairent ensemble, génèrent au moins une couleur secondaire, ladite couleur secondaire pouvant être utilisée, en association avec la première et/ou la deuxième image affichées par le moyen d'affichage, afin d'indiquer une période de temps intermédiaire entre les périodes de sommeil et de réveil sélectionnées.

12. Horloge pour enfants selon l'une quelconque des revendications 9 à 11, dans laquelle la ou les lumières, ou ensembles correspondants, sont placées derrière le moyen d'affichage.

13. Horloge pour enfants selon l'une quelconque des revendications 9 à 12, dans laquelle la sortie de la (des) lumière(s) est variable.

14. Horloge pour enfants selon l'une quelconque des revendications précédentes, dans laquelle le moyen d'affichage peut afficher une troisième image qui est un affichage d'horloge.

15. Horloge (2) pour enfants selon l'une quelconque des revendications précédentes, en association avec un livre (72) contenant une ou plusieurs images correspondant à celles qui peuvent être affichées par le moyen d'affichage du dispositif.
